Europäisches Patentamt

European Patent Office

Office européen des brevets

(11) Publication number: 0 644 532 A1

# EUROPEAN PATENT APPLICATION

(21) Application number: 94114816.5

(51) Int. Cl.⁶: G11B 5/596, G11B 5/55

(22) Date of filing: 20.09.94

(30) Priority: 20.09.93 US 123517

(43) Date of publication of application:
22.03.95 Bulletin 95/12

(84) Designated Contracting States:
DE FR GB

(71) Applicant: Hewlett-Packard Company
3000 Hanover Street
Palo Alto,
California 94304 (US)

(72) Inventor: Hercher, Michael
330 West Shore Dr.
Marblehead, MA 01945 (US)
Inventor: Purmal, Gerald W.
P.O. Box 1746
Los Gatos, CA 95031 (US)

(74) Representative: Schoppe, Fritz, Dipl.-Ing.
Patentanwalt,
Georg-Kalb-Strasse 9
D-82049 Pullach (DE)

(54) **Artifact, arm, method and apparatus for measuring position of the read/write arms of computer memory disks during servo-track writing.**

(57) An artifact (2) is used in the positioning of the read/write arm (4) during servo-writing (32) of a computer memory disk. A method for positioning the arm (4) using the artifact (2), and an apparatus incorporating the method is also included. The artifact (2), when applied to a moveable read/write arm 84), which traverses the surface (6) of a computer memory disk can be read without the presence of the housing, or through a permeable window in the housing of the disk, and which is read by an external laser beam (14; 84, 85) and thence processed by interference laser metrology techniques to produce an electrical signal which provides a representation of the displacement of the arm (4) from the center of the disk.

Winchester drives provided with one or more optical windows to view the artifact-containing arm are especially adaptable to use of this artifact (2), apparatus, and method of this invention.

FIG.4

## FIELD OF THE INVENTION

This is an invention to facilitate the writing of servo-tracks on magnetic hard disks used as mass storage devices in computers. The servo-track writing process consists of positioning of the read-write head at the desired radial position on the hard disk, and then writing the servo track information on the hard disk. This servo track information contains information to allow radial alignment of the head on the hard disk surface, and also contains encoded data to identify the angular position of the head on the surface.

## SUMMARY OF THE INVENTION

An artifact, in the form of a scale, or coarse diffraction grating, is used in the servo-track writing of a computer memory disk.

The artifact, when applied to a moveable read/write arm which traverses the surface of a computer memory disk, is illuminated, either directly, or through a permeable window in the housing of the disk by an external laser beam. The resulting interference pattern is then processed by interference laser metrology techniques to produce an electrical signal which provides a representation of the displacement of the arm from the center of the disk.

Winchester disk drives provided with optical windows to view the sensor-containing arm are especially adaptable to use of these artifacts, this apparatus, and the method of this invention.

The invention described herein allows the servo writing and sector mark generation to be performed without contact of the measuring system with the artifact. By using ports or windows in the housing of the computer memories which are transparent to the radiation used to create the interference pattern, the current invention allows the servo writing and sector mark generation to be performed after the housing has been sealed, and without the need to reopen the housing.

## BACKGROUND OF THE INVENTION

An essential element of the modern computer, including the personal computer, is a mass-storage device.

Unlike the random access memory (RAM) which holds the data which is being immediately accessed by the computer, the mass-storage device holds data not currently being used, as well as programs not currently needed.

One of the most widely-used mass-storage devices used today is the so-called hard disk drive (HDD). The heart of this device is a disk, or *platter*, coated, often on both sides, with a magnetic surface, upon which information may be repeatedly written and read.

Such disk drives may contain a single platter having a diameter of two inches or less, with storage capacities of 20 megabytes (twenty million bytes, each byte containing eight bits, and each bit representing a data assertion or negation (a "one" or a "zero")). On the other hand, other disk drives may contain a number of platters, with diameters of eight inches and more, with storage capacities measured in gigabytes (ten to the power nine bytes of eight bits each).

As with all such magnetic media, the disk drive uses one or more read/write heads for each data surface to store and retrieve data. On the Hard Disk Drive, each read/write head is supported by an arm, and the head "floats" on a cushion of air a few micro-inches above the surface of the disk. The disk must thus be enclosed in a sealed housing to keep dust and other impurities out of the air cushion between the read/write heads and the disk surfaces.

The read/write arm is controlled by a control system containing electronics which accurately and precisely position the head in accordance with a control signal.

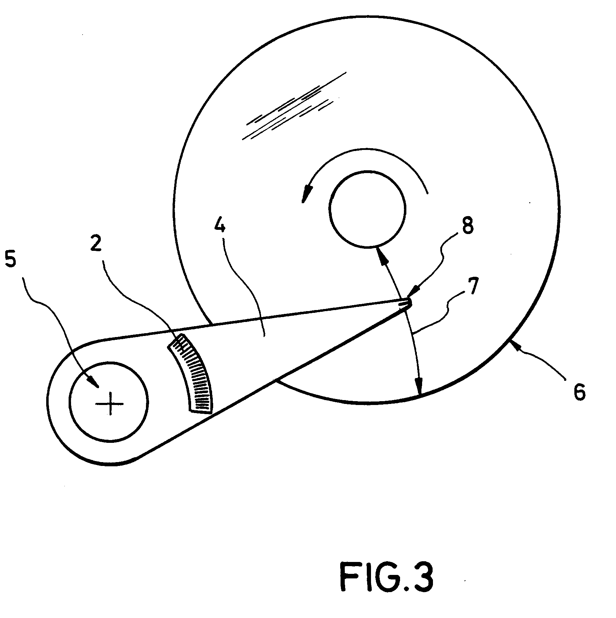

In a popular implementation of such a control system, the arm is pivoted about a point located outside of the circumference of the disk, so that the end of the arm describes an arc of a circle as it moves, as shown in Figure 3. Hard disk drives using this technique are known as *Winchester* disk drives. In such a system, the position of any point on the surface of the disk may be specified in terms of the angular position of the arm about its axis, and the angular position of the disk.

In order to provide repeatability of positioning, it is necessary to perform an initialization before any data is written on the disk. For modern, high-density hard disk drives, this initialization consists of writing servo-tracks on the surfaces of the disk drive. Some hard disk systems provide for writing "embedded" servo tracks on every surface used for the storage of data. Other hard disk systems provide for the writing of a "dedicated" set of servo tracks on a single surface which contains no other information, while the remaining surfaces of the system contain data only. In either case, the servo-track-writing process is carried out near the end of the disk system's manufacturing process.

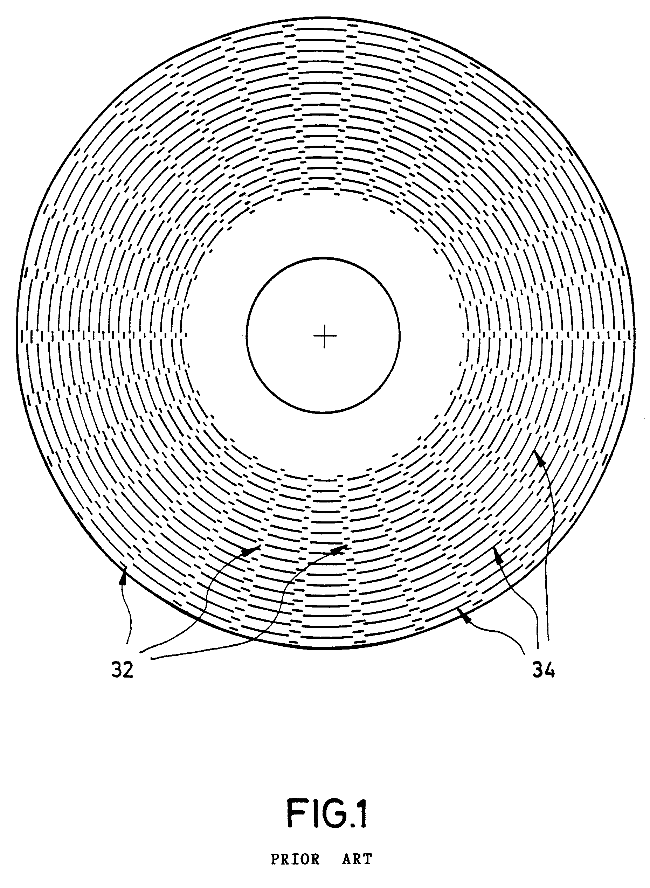

Figure 1 shows a representation of the manner in which embedded servo-track data are often written on a hard disk. The servo-track data is embedded in the sense that it is written in the same general location as the data to be stored. This figure, which is not to scale, illustrates the usual half-track servo writing, in which servo-track data 32 is written between the tracks which carry stored data 34. As the read-write head follows along a data track, it picks up signals from both adjacent servo tracks; the position of the read-write arm is servo-controlled to keep the signals from the two servo tracks equal in amplitude, thereby keeping the head centered on the data track. Information encoded in the servo track identifies both the track and sector position information (i.e. both the radial and angular coordinates on the hard disk surface). Different hard disk manufacturers may use different variants of this technique, and different data encoding schemes.

In the past, the radial position of the read-write head (i.e. the angular position of the read-write arm) has been measured by techniques such as temporary attachment of a retroreflector to the read-write arm itself, and the measurement of the retroreflector position using a laser interferometer.

The pre-existing servo-track writing technique described above has a number of disadvantages. Specifically, (1) the hard disk enclosure must be opened to the surrounding environment in order to attach the retroreflector (or equivalent device), and (2) the inertial mass of the device attached to the read-write arm perturbs the motion of the read-write arm, particularly with the small, light arms being used with miniaturized hard disks.

A system for the precise positioning of the read-write arm during embedded servo-track writing is described in U.S. patent 4,920,442 (Dimmick, 1990), wherein the special fixture is used to position and align a laser beam retroreflector on one of a multiplicity of read/write arms, which retroreflector is then used in conjunction with a laser interferometery system to write the embedded servo tracks.

Yet another approach to positioning the arm for the writing of servo tracks is described in U.S. patent 4,831,470 (Brunnett et al., 1989), in which an optical encoder is temporarily attached to the arm to precisely indicate the position of the read/write arm during servo track writing. The optical encoder is removed after the embedded servo track writing has been completed.

In such implementations as described above, the disk memory is manufactured as an assembly within a sealed housing which contains openings sealed with removable "peel-off" material. Next, the opening above the read/write arm is uncovered, exposing the read/write arm within the housing. Some type of measurement device is attached to this arm, providing for precise positioning of the arm. The initialization process is then performed by writing the embedded servo tracks and sector marks. After these processes have been completed, the measurement device is removed, and the housing is re-sealed.

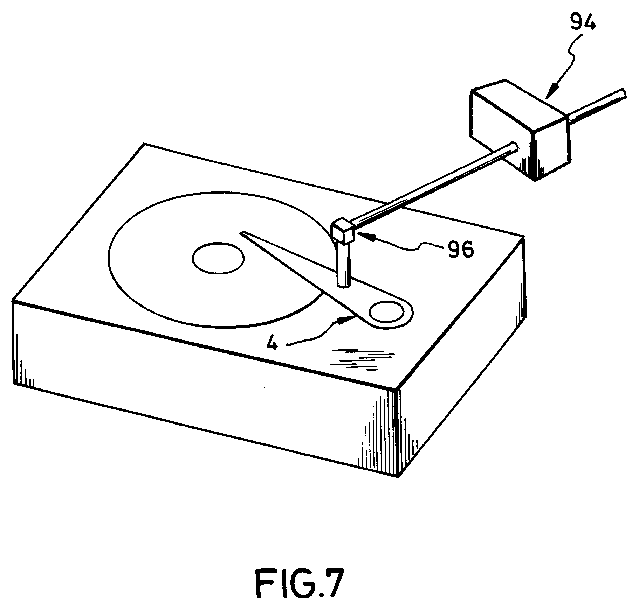

Figure 7 depicts a typical system of this type. The retro-reflector, 96, must be temporarily attached to the read/write arm, 4. The metrology system, 94, containing both optics and electronics, is located outside of the memory being calibrated.

Some of the prior art uses laser interferometery techniques for the measurement of a detector position. The use of such techniques for the precise measurement of small displacements is well known. Such systems are described in U.S. patents 5,005,144 (Nakajima, 1989), 4,872,751 (Hercher, 1988), 4,322,162 (McKelvie et al., 1982), 4,850,693 (Deason et al., 1989), 4,432,239 (Bykov, 1984), and 4,436,419 (Stetson et al., 1984). U.S. patent 5,098,190 (Hercher et al., 1992) describes a system which provides enhanced accuracy by using an array of detectors.

Because of the problems of dust and other foreign matter damaging the disk surface during the initialization process, the processes performed according to the prior art must be performed in a "clean" environment, further increasing the cost and time required to complete writing of the servo tracks.

As a result of the time required to be expended, as well as the complexity and amount of equipment required, the initialization of the disk memory has been a significant component of the cost of the manufacturing of the disk memory.

The current invention circumvents all of these problems. By attaching small artifacts to the read-write arm, or by manufacturing equivalent artifacts onto the arm itself, and by providing the case of the disk drive with transparent glass or plastic windows, the present invention provides a means to precisely measure the radial location of the read-write head without having to expose the hard disk drive to the surrounding environment, and without making any physical contact with the interior components of the hard disk drive.

DESCRIPTION OF THE INVENTION

A general object of the current invention is to provide a rapid, low cost, and accurate technology for positioning the arm during servo-track writing as described above.

A specific object of the present invention is to provide accurate arm positioning without requiring opening of the sealed housing, and without any physical contact between the measurement system and either the disk or the read/write arm.

According to one aspect of the present invention an artifact is provided, in the nature of a scale or coarse diffraction grating, and having either a rectangular form, or having the shape of a sector of an annulus, or an entire annulus or ring. The grating is either attached to, or manufactured as part of, the read/write arm.

The reflective or transmissive artifact can be one of any of the standard types used in optical measurements. It may be of the type whereby ridges are provided in a repetitive pattern, on the order of one or two thousand ridges per inch, with the distance between the high and low points of the ridges approximately one fourth of a wavelength of the radiation used to illuminate, or any odd integer multiple of such quarter-wavelength. Or it may of the type in which a pattern of varying optical reflectivity or transmissiveness is repeated, at a spatial density approximately as above.

The artifact can be produced separately, and then attached to the arm, or may be manufactured as part of the arm. Techniques for production of the artifact include e-beam lithography, laser lithography, photographic means, machining, embossing, molding, and etching, and are well known.

Whichever method is used, the artifact may be provided on the arm very inexpensively, and once applied to the arm need never be thereafter removed, resulting in a significant cost advantage over the prior art, in which external fixtures, devices, and encoders had to be both applied to and removed from the hard disk assembly.

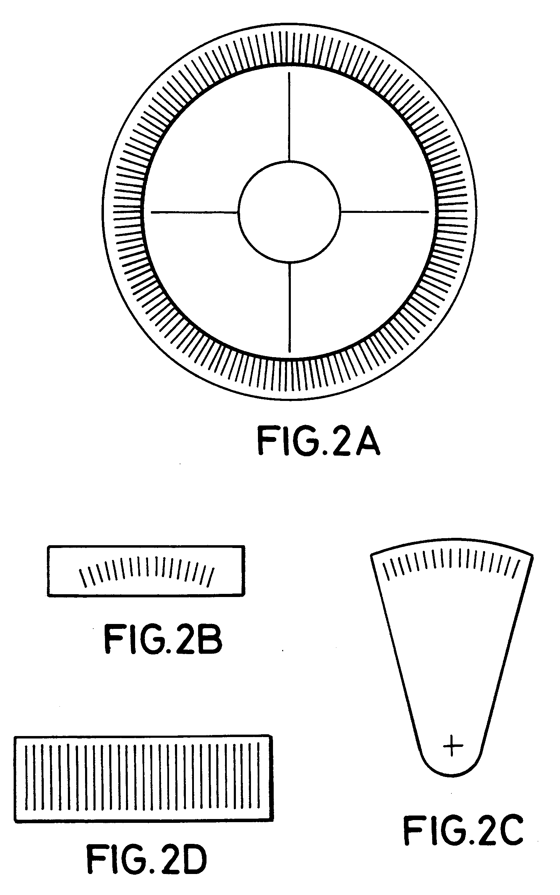

A typical circular artifact contains 4096 lines around its circumference of about 1 1/2 inches, more or less. Figure 2 shows three typical configurations of artifacts. Figure 2A is an annular artifact, Figure 2B and 2C are in the form of sectors, and Figure 2D is a rectangular artifact.

Another aspect of the present invention provides for the inclusion of windows, or ports, in the housing of the disk drive, so that some portion of the artifact can be illuminated with a source of electromagnetic radiation, and so that the interference pattern produced thereby may be viewed. The port above the artifact must be so located that some portion of the artifact can be viewed throughout the entire excursion of arm's travel.

Once the artifact is provided on the arm, the disk may be sealed in its housing, and the housing need not be reopened thereafter. The subsequent initialization is thus performed without exposing the disk mechanism to dust and other foreign objects which could degrade performance, or damage the disk, and is thus a significant advantage over prior art. However, the invention may be utilized with the housing opened, in which case the servo-track writing must be done in a clean environment as before, but a savings in time and equipment is still realized.

Still another aspect of the present invention is the temporary attachment of an optical metrology system external to the sealed housing, which measures the arm position (hereinafter "arm metrology system"). Within this arm metrology system a source of electro-magnetic radiation in the form of a beam of light is directed onto the artifact, which reflects and diffracts the beam. The diffracted signal is next directed, combined, and processed, via an optical system, and is then transformed into an electrical signal by a detector. The detector produces electrical signals from which the displacement of the read/write head from the center of the disk can be precisely determined.

Yet another aspect of the present invention is the use, in the metrology systems, of spatial filters to enhance the production of the interference patterns. These spatial filters are opaque shields in the optical path, containing holes, spaces, or areas transparent to the radiation, so that only certain orders of the beams diffracted by the artifacts are allowed to combine.

Yet another aspect of the present invention is the packaging of the metrology system in physical modules, so that the time and effort required to align the optics of the metrology systems is minimized.

The packaging of the entire metrology system into a module is thought to be a significant advance over the prior art, since the module is aligned and calibrated once and only once. Conversely, the prior art required the alignment of the metrology system each time is was attached to a new disk memory to be initialized, being that the part of the metrology system (e.g. the retroreflector in U.S. patent 4,920,442) was physically coupled to the read/write arm.

A further advance over the prior art is the use of an optical system and detector which is located at some distance from the artifact. This allows read out through a window and without physical contact between the artifact and the optical system and detector.

Although it is presently contemplated that the invention described herein will be especially useful in servo-track writing of computer memory disks, said invention may also be used for positioning of arms in other types of applications, including, *inter alia*, optical disk memory technology.

Another advance over the prior art is the processing of the interferometric signal, which provides a substantial gain in resolution and accuracy relative to the prior art.

BRIEF DESCRIPTION OF THE DRAWINGS

These, and further features of the invention, may be better understood with references to the accompanying specification and drawings depicting the preferred embodiment, in which:

Figure 1 depicts prior art, showing the surface of a magnetic data disk, showing embedded servo tracks, and the sector marks.

Figure 2 depicts several artifacts. Figure 2A shows a circular artifact; Figure 2B and 2C show artifacts which are sectors of circles; and Figure 2D shows a linear (as opposed to radial) artifact for use with a linear head positioning system.

Figure 3 depicts a portion of a Winchester disk drive, ( i.e., of the rotary actuator type), showing the magnetic disk and the read/write arm, and showing the path of the head as the arm is rotated.

Figure 4 depicts the artifact provided on the arm of the memory disk, with the physical module containing the metrology system in place, and with the laser beam impinging on the artifact, and then being diffracted and reflected off the artifact back into the metrology module.

Figure 5 depicts the arm metrology system for the first preferred embodiment of the invention, using a single-frequency laser source, showing the laser beam reflecting off the artifact, splitting into a multiplicity of diffracted beams thereafter, thence being directed through an optical system, spatially filtered, and detected by the structured detector.

Figure 6 depicts the arm metrology system for the second preferred embodiment of the invention, using a dual-frequency laser source, showing the laser beam being split into beams of two separate frequencies, diffracting off the artifact thereafter, thence being directed through an optical system, spatially filtered, and detected by the detector.

Figure 7 depicts one example of the prior art which the current invention replaces, and contains a retro-reflector attached to the arm for calibration purposes.

## DETAILED DESCRIPTION OF THE PREFERRED EMBODIMENTS

The first embodiment uses the structured detector technique described by Hercher et al. in US patent 5,098,190, which is incorporated by reference hereby. Said patent describes a system in which three interferometric electric signals which differ only in their phases are generated in order to perform displacement measurements with enhanced accuracy. Although said patent describes a system which uses three phases, the disclosure in said patent makes it clear that any number of phases in excess of two may be used.

Referring to Figure 3, the artifact 2 is located on arm 4, which is pivoted about an axis 5, thereby moving the read/write head 8, in an arc 7 across the surface of the disk 6.

The artifact has the form of a sector of an annulus as in Figs. 2B and 2C.

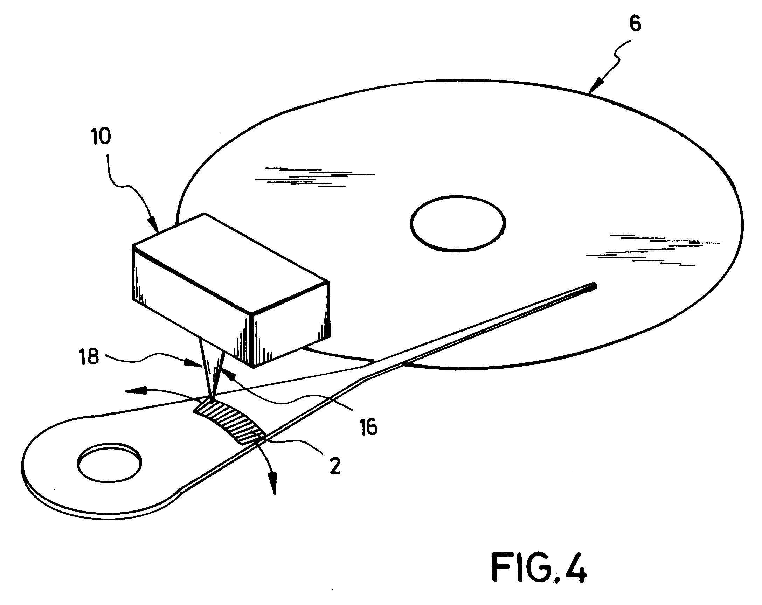

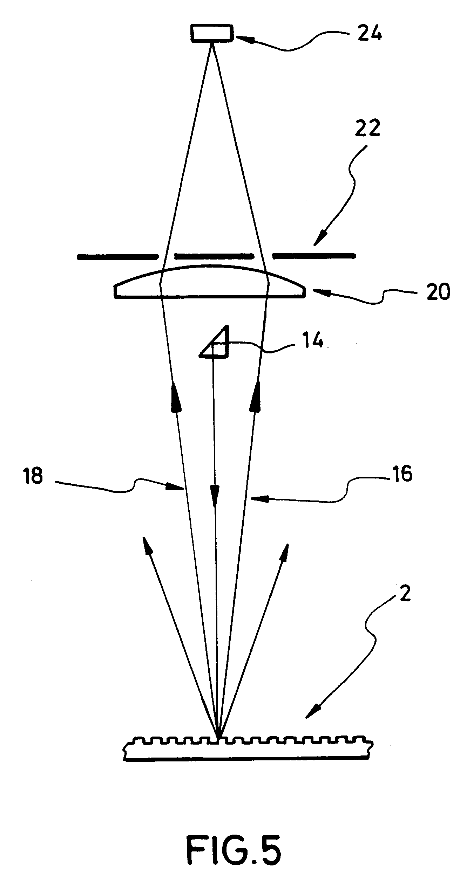

Referring to Figs. 4 and 5, a single-frequency laser-diode beam 14, packaged in module 10, enters through a window (not shown) in the disk system's housing, and impinges upon the artifact 2, which diffracts the beam into various orders on either side of the spectral beam 16, 18. These diffracted orders are directed, via the optical system 20, through spatial filter 22 which allows only the plus and minus one orders to combine, forming an interference fringe pattern on the structured detector 24. This structured detector is in the form of an array of separate detector elements, each element of which produces an electrical signal independent of each other element of the array.

As the artifact moves a distance d, the entire fringe. pattern moves a distance on the structured detector 24 proportional to d. The outputs of the elements of the structured detector are then processed to produce a signal representative of the displacement of the arm.

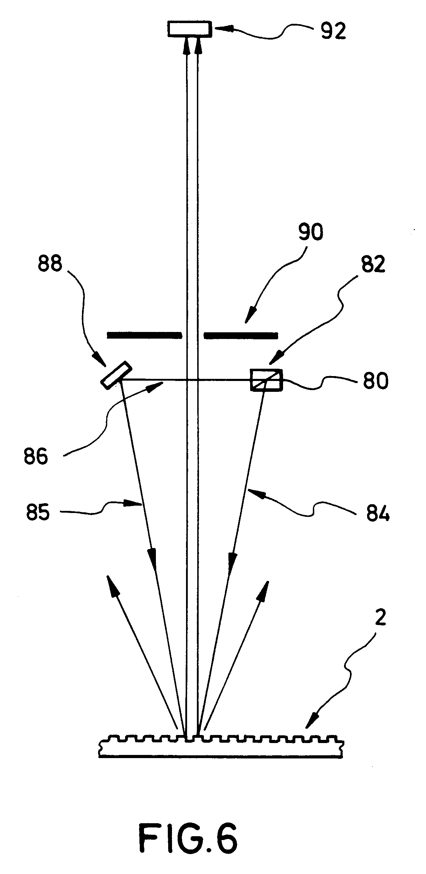

A second embodiment is similar to the first embodiment, except that the metrology system differs between the two embodiments. In this second embodiment, referring to Fig. 6, a dual-frequency laser source produces a beam, 80, which contains two discrete frequencies, f1 and f2, with each frequency having a different polarization. Beam 80 is directed onto polarizing beam splitter 82. The portion of the laser source containing radiation of frequency f1 only, is reflected, as beam 84, through a window(not shown), and onto the artifact 2, while the remainder, containing radiation of frequency f2 only, is transmitted through the polarizing beam splitter 82 and thence, as beam 86, onto mirror 88, where it is reflected, through the window, as beam 85, and thence onto the artifact 2.

The two beams, 84 and 85, impinge onto the detector at angles equal in magnitude and opposite in direction to each other. These two beams are diffracted by artifact 2, into various orders on each side of the specular beams, and these diffracted orders are directed back into the arm module, through spatial filter 90, which allows only the plus and minus one orders of each frequency to combine, forming a heterodyne optical signal whose frequency, f3, is:

$$f3 = |f2-f1| \quad [1]$$

This optical signal is directed onto a detector 92, which produces an electrical signal whose frequency is the heterodyne frequency f3.

As the artifact 2 moves at a speed v1, the frequency of the electronic heterodyne signal is Doppler shifted by an proportional amount. An electronic circuit, integrates this Doppler shifted signal over a period of time, producing an electronic signal which is proportional to distance moved by the artifact during that time.

Although the preferred electro-magnetic radiation source for this invention is the laser, other sources of elecro-magnetic radiation may be used, including, *inter alia*, X-rays, E-beams, and light-emitting diodes.

While the invention has been described with reference to specific embodiments, it will be apparent that improvements and modifications may be made within the purview of the invention without departing from the scope of the invention defined in the appended claims.

## Claims

1. A method for positioning the read/write arms (4) of computer memory disk systems, where a computer memory disk is contained within a memory disk enclosure, where the computer memory disk system contains at least one disk having at least one surface (6), where the computer memory disk system contains an arm assembly consisting of at least one arm (4) carrying at least one read/write head (8) traversing over each such disk surface (6), where the method comprises:
   providing an artifact (2) in the form of a coarse diffraction grating on the arm assembly;
   illuminating the artifact (2) by electromagnetic radiation (14; 84, 85) and diffracting said electromagnetic radiation thereby;
   directing the diffracted electromagnetic radiation (16, 18) onto a detector (24; 92) and processing the output of the detector, thus producing a signal which is a function of the displacement of the arm assembly.

2. The method of claim 1, wherein the directing of the diffracted electromagnetic radiation (16, 18) onto a detector is done by an optical directing sub-system (20).

3. The method of claim 2, wherein the method is used for the writing of servo tracks (32) on a magnetic disk memory, and further comprising producing an electrical signal which is a function of the displacement of the arm assembly relative to the center of the disk.

4. The method of claim 3, wherein the diffracted electromagnetic radiation (16, 18) is a result of reflection off the artifact (2).

5. The method of claim 4, further comprising:
   providing a single-frequency laser beam (14) as the source of electromagnetic radiation; and selecting of two beams (16,18) from die radiation reflected and diffracted by the artifact (2);

combining the two reflected beams (16, 18) by an optical combining subsystem, producing an interference pattern having a phase thereby; and

detecting the interference pattern by an array of detectors (24), thereby producing the electrical signal which is a function of the displacement of the arm assembly relative to the center of the disk.

6. The method of claim 5, wherein the selecting of the two reflected beams is accomplished by applying a spatial filter (22) to the electromagnetic radiation diffracted and reflected from the artifact (2).

7. The method of claim 5, further comprising:
   detecting the interference pattern such that at least three interferometric electric signals which differ only in their phases are generated;
   calculating the accumulated phase of the detected interference pattern over a period of time; and
   calculating the precise radial displacement of the arm assembly relative to the center of the disk from the accumulated phase.

8. The method of claim 4, further comprising:
   providing a dual-frequency laser beam (80), consisting of two superimposed beams of slightly different frequencies, as the source of electromagnetic radiation; and
   directing the two beams (84, 85) onto the artifact by optical directing means (82, 88), whereby each beam impinges upon the artifact (2) at a different angle, and where the angle formed by each beam, as measured from a normal to the artifact (2), is equal in magnitude and opposite in sense to the other such angle; so that the two beams (84, 85) are combined, by an optical combining sub-system, in the plane of the artifact to create an interference pattern, which is then directed onto the detector.

9. The method of claim 2, 3, 4, 5, 6, 7, or 8, further comprising:
   packaging the source of electromagnetic radiation, optical combining sub-system (20), optical directing sub-system (20), and detector into a single modular package (10) located outside of the memory disk enclosure.

10. The method of one of the preceding claims 1 to 9, wherein the computer memory disk system forms an assembly within a sealed housing containing a window transparent to electromagnetic radiation.

11. An apparatus for positioning the read/write arms (4) of computer memory disk systems, where a computer memory disk is contained within a memory disk enclosure, where the computer disk system contains at least one disk having at least one surface (6), where the computer memory disk system contains an arm assembly consisting of at least one arm (4) carrying at least one read/write head (8) traversing over each such disk surface (6), where the apparatus comprises:
a source of electromagnetic radiation (14, 80);
an artifact (2) in the form of a coarse diffraction grating, which diffracts the electromagnetic radiation, and which is provided on the arm assembly;
a detector (24; 92), which produces an electrical signal proportional to the electromagnetic radiation (16, 18) diffracted by the artifact (2); and
an electronic processing sub-system which processes the output of the detector, thus producing an electrical signal which is a function of the displacement of the arm assembly.

12. The apparatus of claim 11, further comprising an optical directing sub-system (20) which directs the diffracted electromagnetic radiation onto the detector (24; 92).

13. The apparatus of claim 12, wherein the apparatus is used for the writing of servo tracks (32) on a magnetic disk memory, and wherein the electronic processing sub-system produces an electrical signal which is a function of the displacement of the arm assembly relative to the center of the disk.

14. The apparatus of claim 13, wherein the diffracted electromagnetic radiation (16, 18) is a result of reflection off the artifact (2).

15. The apparatus of claim 14, further comprising:
a single-frequency laser beam (14) as the source of electromagnetic radiation;
an optical selecting sub-system which selects of two beams from the electronic radiation diffracted by the artifact;
an optical combining subsystem (20) which combines the two diffracted beams, producing an interference pattern having a phase thereby; and
an array of detectors (24) which detects the interference pattern, thereby producing an electrical signal which is a function of the displacement of the arm assembly relative to the center of the disk.

16. The apparatus of claim 15, further comprising a spatial filter (22) which performs the selecting of the two reflected beams.

17. The apparatus of claim 15, further comprising:
a multi-phase detector which detects the interference pattern such that at least three interferometric electric signals which differ only in their phases are generated;
a phase-calculating subsystem which calculates the accumulated phase of the detected interference pattern over a period of time; and
a displacement-calculating subsystem which calculates the precise radial displacement of the arm assembly relative to the center of the disk from the accumulated phase.

18. The apparatus of claim 13, further comprising:
a dual-frequency laser beam (80), consisting of two superimposed beams of slightly different frequencies, as the sourve of electromagnetic radiation; and
an optical directing subsystem (82, 88) which directs the two beams onto the artifact (2), whereby each beam impinges upon the artifact (2) at a different angle, and where the angle formed by each beam, as measured from a normal to the artifact (2) is equal in magnitude and opposite in sense to the other such angle, so that the two beams are combined in the plane of the artifact to create an interference pattern, which is then directed onto the detector (92).

19. The apparatus of claim 12, 13, 14, 15, 16, 17, or 18, further comprising:
a modular package (10) containing the source of electromagnetic radiation, optical combining sub-system (20), optical directing sub-system (82, 88), spatial filter (22), and detector, which is located outside of the memory disk enclosure.

20. The apparatus of one of the preceding claims 11 to 19, wherein the computer memory disk system form an assembly within a sealed housing.

21. The apparatus of claims 11 to 20, wherein the electrical output of the detector is processed by metrology techniques.

22. The apparatus of claim 21, wherein the diffraction grating further comprises a repeating pattern of lines in the form of ridges, wherein the distance between the high and low points of the ridges is an odd integer multiple of one quarter of the wavelength of the electromagnetic radiation (14; 84, 85) being diffracted and reflected from the artifact.

23. The apparatus of claim 21, wherein the diffraction grating further comprises an alternating pattern of lines of different optical reflectivity.

24. The apparatus of claims 21 to 23, wherein the diffraction grating is in the form of a ring, and wherein the lines are aligned radially to the center of the ring.

25. The apparatus of claims 21 to 23, wherein the diffraction grating is in the form of a sector of a ring, and wherein the lines are aligned radially to the center of the ring.

26. The apparatus of claims 21 to 23, wherein the diffraction grating is in the form of a rectangle, and wherein the lines are parallel to one another.

FIG.1

PRIOR ART

FIG.2A

FIG.2B

FIG.2C

FIG.2D

FIG.3

FIG.4

EP 0 644 532 A1

FIG.5

FIG.6

FIG.7

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | US-A-5 227 625 (IBM CORP.)<br><br>* the whole document * | 1-7,<br>10-17,<br>21-23,26 | G11B5/596<br>G11B5/55 |
| Y | IBM TECHNICAL DISCLOSURE BULLETIN, vol.33, no.11, April 1991, NEW YORK US page 428, XP000110459 'HEAD POSITIONING TO SERVOWRITE MAGNETIC DISK FILES'<br>* the whole document * | 1-4,<br>10-15 | |
| Y | EP-A-0 530 698 (CANON K.K.)<br><br>* page 6, line 37 - line 43; figure 8 * | 1-4,<br>10-15 | |
| A | US-A-5 179 485 (TAMAYAMA)<br>* the whole document * | 1-26 | |
| A | RESEARCH DISCLOSURE, no.328, August 1991, HAVANT GB page 616, XP000217929 'ACTUATOR CONTACT-FREE SERVO WRITER FOR DASD USING PHASE-DEMODULATED LDV'<br>* the whole document * | 1-26 | TECHNICAL FIELDS SEARCHED (Int.Cl.6)<br><br>G11B |
| A | SOLID STATE TECHNOLOGY, vol.34, no.5, May 1991, WASHINGTON US pages 207 - 211, XP000216494 C. LEE 'SERVOWRITERS: A CRITICAL TOOL IN HARD DISK MANUFACTURING' | 1-26 | |

The present search report has been drawn up for all claims

| Place of search | Date of completion of the search | Examiner |
|---|---|---|
| THE HAGUE | 29 December 1994 | Moyle, J |

EPO FORM 1503 03.82 (P04C01)